# EUROPEAN PATENT SPECIFICATION

(11) **EP 0 650 420 B1**
(45) Date of publication and mention of the grant of the patent: **22.03.2000**
(21) Application number: 93917871.1
(22) Date of filing: 19.07.1993
(51) Int. Cl.: B60P 1/02, B60P 3/04, B65G 67/04

(54) **IMPROVEMENTS RELATING TO GOODS STORAGE**
VERBESSERUNGEN AN EINEM LAGERSYSTEM
AMELIORATIONS APPORTEES AU STOCKAGE DE MARCHANDISES

(30) Priority: 18.07.1992 GB 9215324
(43) Date of publication of application: 03.05.1995
(60) Divisional application: 96109007.3
(73) Proprietor: ADAMS, Mark William, Sutton cum Lound, Retford, Notts DN22 8PT (GB)
(72) Inventor: ADAMS, Mark William, Sutton cum Lound, Retford, Notts DN22 8PT (GB)
(74) Representative: Wood, Graham
(86) International application number: PCT/GB93/01515
(87) International publication number: WO 94/02337

(56) References cited:
- EP-B- 0 437 894
- DE-A- 2 305 792
- DE-A- 2 324 858
- DE-A- 2 740 034
- DE-B- 2 902 918
- FR-A- 2 528 398
- FR-A- 2 530 201
- FR-A- 2 586 976

## Description

The invention of this application relates to improvements in the loading and unloading of goods in a goods storage area in transit. Typically the invention will be used in trailers or trucks for the transport of goods. The invention leads to improvements in the storage capacity of said storage areas. The invention provides a system for an adjustable floor or series of floors which will be movable in relation to the storage area.

Typically vehicle trailers or trucks, whether they be road or rail trailers or trucks are used to carry articles which, when carried, do not fill the trailer or do not properly fit into the trailer. Alternatively, trailers and trucks are built to a cubic capacity which enables safe loading but which falls short of the designed carrying capacity of the vehicle. This is due typically to difficulties encountered in the loading of said goods into the trailer or truck and stacking said goods when they are in the trailer itself. When attempting to stack goods problems are encountered in safely stacking the goods and also preventing damage to said goods. It is therefore commonly the case that conventional vehicle trailers or trucks, although carrying the maximum possible load, have unused space left therein due to the inability to stack the goods in that space whether due to safety or size restraints. This is a problem which has been attempted to be solved by the use of scissor lifts let into the floor of the lower deck. A further problem is encountered in those trailers or trucks which incorporate a step at the front of the trailer to utilise the space available above the vehicle and trailer coupling. The main problem involves lifting the goods onto this stepped area and it is found that this area is on occasion not used due to these difficulties.

Furthermore it is evident that current lifting and goods moving requirements lead to the human loaders undertaking tasks which are in contravention of increasingly stringent Health & Safety requirements. At present up to 17 million working days are lost through back injury caused by bad lifting techniques, and companies which operate goods storage and transporting facilities are increasingly accountable for non-compliance of the correct loading practice.

As a result of these problems several solutions have been used to date. The first is to provide a second deck inside the trailer or truck which provides in effect two loading floors. This has been found to be effective in relation to the transport of white goods such as washing machines, but problems have been found in that although the stacking of goods is improved due to the provision of the second loading surface the same shape and size constraints and loading requirements still apply and optimum loading is not achieved. Further, the level of adaptability of the two deck arrangement is insufficient and also the requirement to load goods onto the top deck can be both time consuming and dangerous to the loaders by the use of external unguarded tail lifts at excessive heights.

A further development has been the provision of hydraulic ram operated movable floors. These floors are provided such that the goods can be lifted onto the floor and the floor subsequently moved upwardly toward the top of the trailer to leave a second, commonly fixed, floor thereunder upon which further goods can be loaded. Problems encountered with this method of loading are that each of the moving floors is provided along the length of the area and is still therefore relatively inflexible in terms of aiding the movement of floor and the use of hydraulic systems in relation to certain goods is not desirable and is of further disadvantage due to ineffective security locking.

Known systems are disclosed in FR-A-2530301 in which there is disclosed a system which allows a base to be moved vertically at fixed points in the storage area at the front and rear of the same, Said points are linked by a fixed height horizontal track along the length of the area, and in FR-A-2528398 which is similar but requires that goods are mounted on pallets which are in turn lifted to a horizontal track along the length of the storage area by fixed lifting and lowering means at the rear of the storage area. However in neither patent is it possible to raise or lower the base or pallet at any selected position in the storage area other than at the fixed lifting and lowering points.

The aim of the present invention is to provide a movable goods storage system for moving goods in a transportable storage area, said system designed to be adaptable and to be easy to use thereby allowing the optimum use of the storage space available and for the base to be movable in vertical and horizontal directions at any selected position in the storage area.

The present invention provides a transportable storage system in a storage area defined by a floor, ceiling, side walls and at least one end wall, said system comprising at least one goods supporting base and two sets of guide means therefore, said sets of guide means positioned at or adjacent to said side walls of the storage area, and arranged to allow movement of the at least one base in vertical and horizontal directions within the storage area and characterised in that the at least one goods supporting base is moved in a vertical or horizontal direction along a first set of guide means and the goods supporting base and first set of guide means are arranged to move along the second set of guide means in the other of the vertical or horizontal directions.

Thus the invention allows a goods storage base to be movable to a required height at any selected position within the goods storage area and also to be movable along the goods storage area to the required location to provide maximum advantage and optimise the use of the storage space available, while ensuring that the storage space underneath the base is available for use.

Typically the second set of guide means are mounted on a substantially horizontal plane and the first set of guide means are mounted in a substantially vertical plane. Thus at least one base is capable of movement within the goods storage area in vertical and horizontal planes along first and second sets of guide means.

In order to maximise the space which is still available to store goods said guide means are provided on and/or adjacent to a side wall of the storage area to allow substantially all of the floor space of the storage area to be available to store goods thereon.

Typically said goods storage area is transportable in the form of a trailer for a road vehicle or a truck in which the said system will be installed.

Typically at least one of said guide means includes a drive means locator and said base is provided with drive means to engage with each of the drive means locators, and movement of same will cause said base to rise or lower.

In one embodiment the drive means locators are in the form of rack members which comprise either of a shaped length of plastics or metal material or a length of chain with indents spaced at regular intervals therein. Typically if a length of chain is used it will be held in tension. Alternatively the drive means locators may incorporate cables or wires to which the base drive means locates or may incorporate hydraulically actuated means.

Typically said base comprises a frame with a floor surface upon which goods can be mounted.

In a further embodiment the base of the goods support system can comprise a frame with provision for pallets to be directly placed thereon. Typically said pallet will be prepacked prior to lifting onto the frame.

In one embodiment said rack members are used to form a rack and pawl arrangement with pawls provided on the base and these are sufficient to support said base and goods loaded thereon in a stationary state during the transporting of said trailer. This embodiment can also act as a safety locking device.

Typically the said pawls are driven to be movable along said rack members and said movement will be constant in each of said pawls to maintain the horizontal plane of the base and goods mounted thereon.

The drive means of the bases are typically provided by means of link shafts coupled to a central drive shaft which can be turned to alter the position of the base, and same are all preferably mounted on the base. Preferably the same will also be provided with a lock system which will ensure that the base is maintained at a certain height even if failure of the drive means should occur. Typically the central shaft is driven by operation of an electric motor in connection with the central shaft.

Preferably said shafts, pinions and drive systems are enclosed thereby eliminating any ingress of foreign matter into the goods carried in the trailer.

In one embodiment said second guide means will be mounted on the side walls of the storage area and the first guide means adjacent thereto. Said first guide means will be movably mounted on the second guide means by a series of rollers movable along a track formed in the guide means.

Typically the second guide means and/or the base can be provided with locking means to ensure that the base can be held in the required position during loading or unloading.

In a further embodiment the base is provided with an extendable portion which, when the base is adjacent the edge of the storage area can be extended to cooperate with lifting means external of the storage area.

The goods supporting system of the invention will be capable of being fitted to new storage areas or to be retrofitted to existing storage areas.

Preferably, said drive means for the base in relation to a set of guide means will be provided by any of pinion or pawl, pulley or hydraulic arrangements acting in conjunction with drive means locators in the form of rack members, pulley cables, ropes or hydraulic rams provided within the guide means and in one embodiment these guide means will be movable in relation to a second set of guide means by manual movement of rollers or skates mounted in the first guide means along the second guide means.

A specific embodiment of the invention will now be described with reference to the accompanying drawings wherein;
Figure 1 relates to a diagrammatic perspective view of a typical goods trailer or truck with a goods support system fitted therein,
Figure 2 shows a plan view of the drive system for a base or frame of the goods support system of the invention;
Figure 3 shows in elevation one embodiment of a movable rack and pawl arrangement as used in Figures 1 and 2;
Figure 3a shows the arrangement of Figure 3 in end elevation;
Figure 4 shows a plan view of a first guide means;
Figure 5 shows a perspective view of an embodiment of the goods support system according to the invention;
Figure 6 shows a plan view of a first guide means as used in Figure 5;
Figure 7 shows an end elevation of a second guide means as used in Figure 5;
Figure 8 shows a roller support means for use in association with a second guide means mounted in the floor of the goods storage area;
Figure 9 illustrates a cross sectional elevation along line A-A of Figure 8;
Figure 10 shows an elevation of a method of loading a trailer of an articulated vehicle using the invention; and
Figure 11 illustrates an elevation of an alternative method of unloading a trailer of an articulated vehicle using the invention.

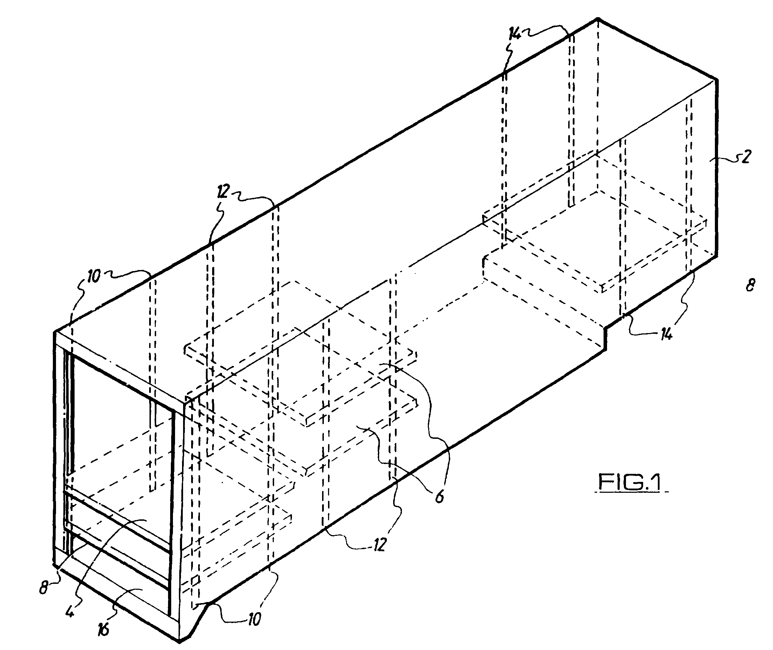

Referring firstly to Figure 1 there is shown a typical trailer or truck 2 for the road transport of goods. Said trailers are used to carry a wide range of goods. A goods support system is shown which comprises a series of bases or frames and hereinafter referred to as bases 4, 6 and 8 mounted in engagement with a first set of guide means 10, 12 and 14 and 16. Each of the said bases are movable, independently, in a vertical direction along the said first guide means. As can be seen the bases 4, 6 and 8 can be moved to, and maintained at, varying heights dependent upon the goods to be carried thereon and also the goods to be carried on the floor 16 of the trader or on a second movable base 18 mounted on the same guide means as base 4 but underneath same.

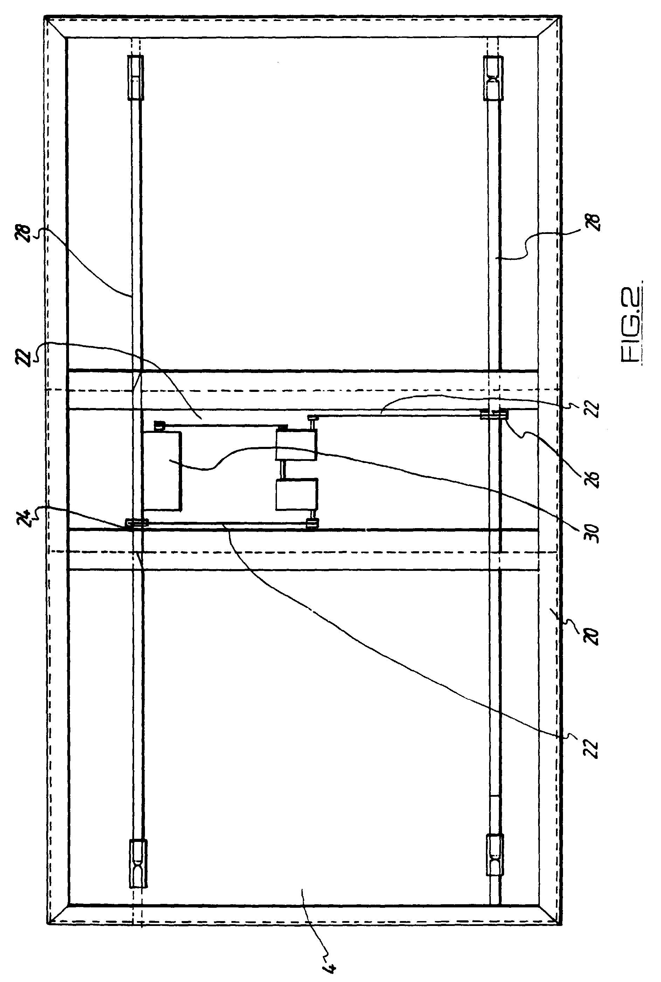

Referring now to Figure 2 there is shown, in simplified detail, one of said bases 4 according to the current invention. Typically, although not shown, the guide means will be fastened or moulded into the walls of the trailer and will be unobtrusive. The base 4 comprises a square or rectangular steel frame 20 in which is mounted central drive connection 22. Said connections are linked by standard coupling arrangements at 24 and 26 to link shafts 28. The link shafts are in turn coupled to drive pawls which in turn are in engagement with rack members provided in the guide means. Thus, rotation of the shafts, in this instance by motor 30, serves to produce the direction of rotation of each of the pawls connected to a link shaft 28 and hence the base is moved up or down the rack members of the guide means. Typically the rack members can be formed from a moulded length of plastics or metal or by a length of standard chain as represented at 34. Alternatively, a pulley arrangement, or hydraulic ram, running within the guide means can be used.

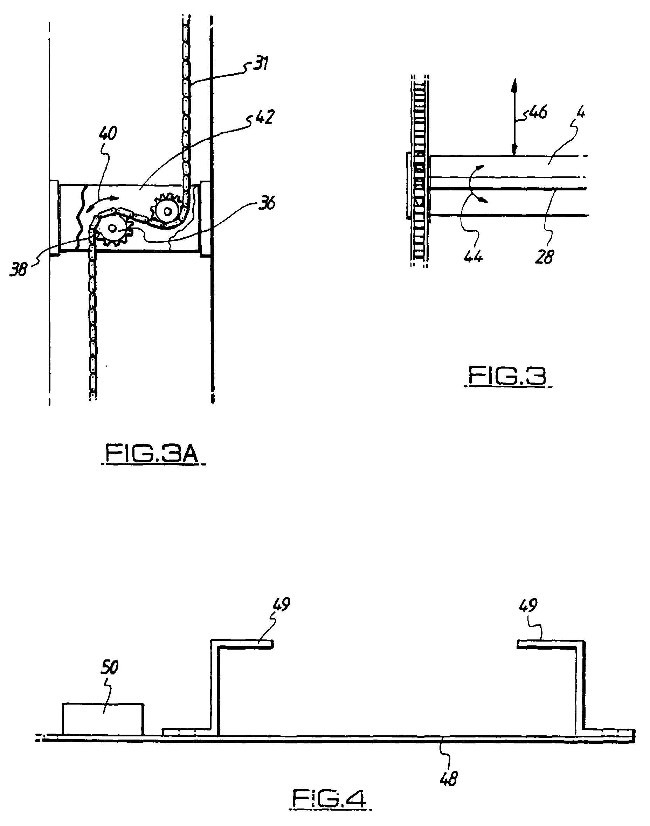

Figures 3 and 3a show in greater detail a typical rack and pinion or pawl system as used with this embodiment Shown is part of a rack member 31 in engagement with teeth 36 of a pinion or pawl wheel 38 which is mounted to rotate around its axis as represented by arrow 40. The coupling arrangement is standard and will be contained in a sealed unit 42 which, for the purposes of this description is shown partly cut away. The pinion 38 is turned by rotation in direction 44 of the link shaft 28. The turning of the link shaft 28 therefore provides movement of the base 4 in the direction 46 upward or downward dependent upon the direction of turn of the shaft.

Figure 4 illustrates a plan view of a guide means 10 of one embodiment with the drive means omitted wherein the guide means include a base plate 48 upon which is mounted two shaped plates 49 which define a guide within which the drive means locator and drive means and pinion wheel 38 move. Also provided is a series of protrusions 50 which engage with a spring loaded lever (not shown) mounted on the base. This lever is biased downwardly against each protrusion to act as a lock should the drive fail and to prevent any downward movement of the base without first withdrawing said levers.

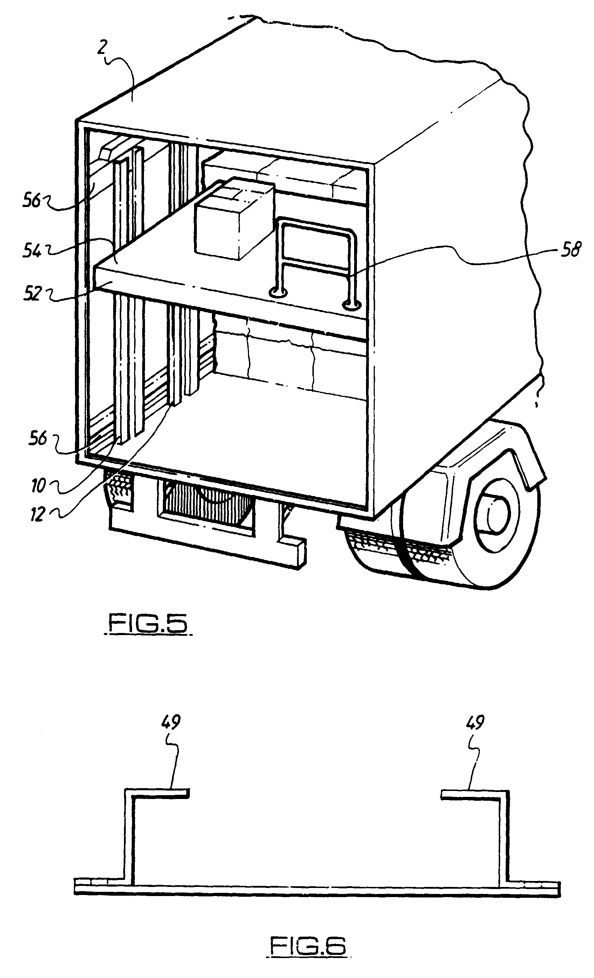

Figure 5 illustrates the invention ,wherein there is incorporated within the storage area of a trailer a movable goods support system 52 with at least one base 54 which is mounted on a first set of guide means 10 and 12 with 14 and 16 (not shown) which allow vertical movement of the base 54. Furthermore the first guide means are mounted on a second set of guide means 56 which in this case are mounted on the side walls of the trailer 2. These second guide means are disposed such as to allow horizontal movement of the first guide means and hence the goods support base 54, along the length of the trailer. Thus there is now provided a goods system 52 which is capable of vertical movement and horizontal movement within the goods storage area. Typically, for safety measures, the goods support base 54 is provided with one or a plurality of safety fences 58 which are particularly appropriate when the base is near the top of the trailer. These fences are fitted primarily to give loaders increased safety and comfort whilst stacking the vehicle and also to retain the load mounted on the base during travel.

Typically there is also provided, although not shown in this instance, a locking means which ensure that the first guide means can be locked in position in relation to the second guide means and also that the frame 54 can be locked in position in relation to the first guide means hence providing a safe but movable goods system. From experience it has been found that powered drive of the base 54 in relation to the first guide means 10 and 22, 14 and 16 in the vertical direction by any of the drive means as previously described is most appropriate but that the provision of a series of rollers on each of the first guide means in engagement with the second guide means provides adequate and efficient movement by manual movement of the first guide means in relation to the second guide means.

Figure 6 illustrates a plan view of the first guide means as used in this embodiment of the invention wherein it can be seen that the guide means are again formed by two shaped plates 49 but in this case the protrusions 50 have been removed. This is not always the case and these can be included if required.

Figure 7 illustrates a typical end elevation of a second guide means wherein it can be seen that the said guide means is formed of two plates 60 and 62 which in combination provide a guide along which the rollers of the first guide means can move.

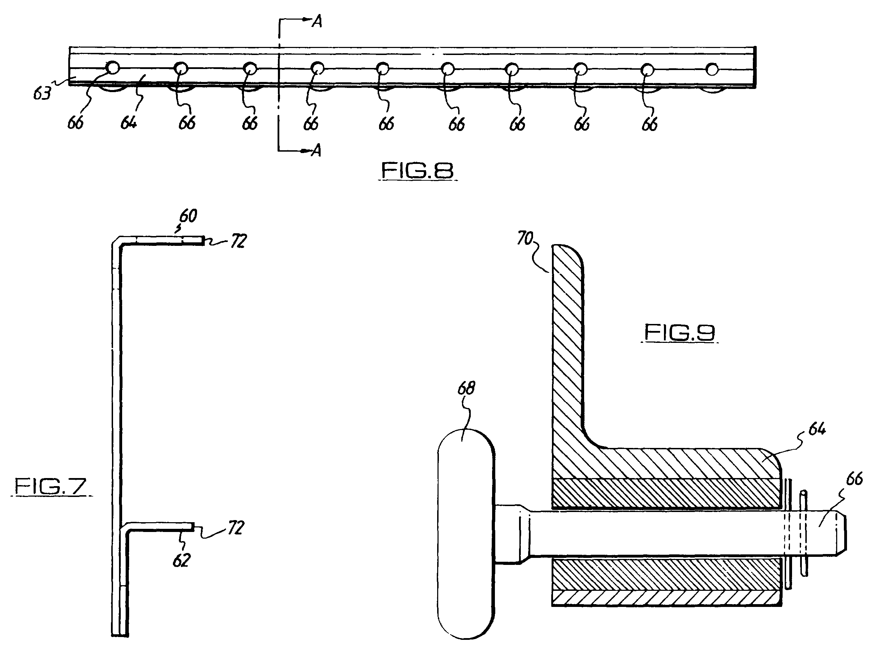

Figure 8 shows a mounting 64 for a series of rollers which is provided in engagement an each of the first guide means and each of the axis 66 of the series of rollers on the mounting are shown.

Said mounting therefore is disposed in a first guide means to pass along the second guide means as shown in Figure 7 and thereby provide movement of the first guide means in relation to the second guide means. In one particular application the mounting 64 comprises an alloy extrusion 63 which, in an embodiment for carrying heavy weights, is provided adjacent to a second guide means (not shown) which is fitted into the floor. The rollers 68 or skates in the mounting 64 are therefore provided to pass along the path of the guide means in the floor. This particular embodiment ensures that heavy weights can be lifted and moved on the goods support base.

Figure 9 illustrates a cross section through line A-A of Figure 8 of such a mounting of rollers and. here one of the rollers 68 can be seen to have its axis through the support mounting 64 with the axis 66 passing through the said mounting. The roller 68 will lie within the second guide means of Figure 7 with the wall 70 of the mounting abutting with the edges 72 of plates 60 and 62 of Figure 7 to maintain the rollers within the guide means.

It is also possible that, if required the base can be fixed in relation to the first set of guide means and only movable in relation to the second set of guide means by movement of the first guide means along the second guide means. Alternatively the base can be directly linked to the guide means in the horizontal plane for movement therealong.

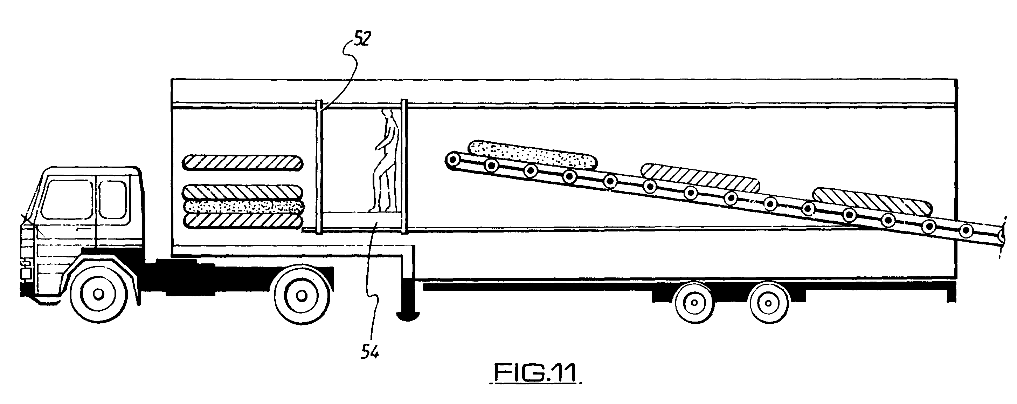

Figures 1OA,B,C,D and 11 indicate two methods of loading and unloading a vehicle using the movable goods storage system of the invention. Although not shown, this second embodiment can be used in conjunction with other movable goods system thereby providing an integrated and movable goods support system which allows optimization of the storage area.

Referring firstly to Figure IOA there is shown the trailer of an articulated vehicle in the initial stages of storage of goods. As can be seen the goods 73 to be stored are of a random size and nature and therefore it is extremely difficult to predict and provide fixed goods storage floors which can accommodate all different sizes of articles. it is in situations like these that the present invention is of particular benefit. The goods storage system is shown having been moved to the end of the vehicle with the base 54 at its lowest point. As the goods are placed into the trailer so the space is filled and the operator is required to be moved towards the rear of the trailer and does so as indicated in Figure IOB wherein the operator can push the system along the second guide means 56 to the required position and can also if necessary raise the base 54 on the first guide means 10 12, (14, 16, not shown) to the level which is most appropriate for placing the goods on those goods already in place. Typically movement of the first guide means in relation to the second guide means will be by physical pushing or pulling of same but can equally be powered if this is more appropriate and the vertical movement of the base 54 in relation to the first guide means is by powered arrangement. In all cases it is envisaged that the powered drive will be controlled by a hand held control system of conventional means which will be connected to the drive by flexible cabling and will allow operation of the goods system by the operator without needing to go to a fixed control point.

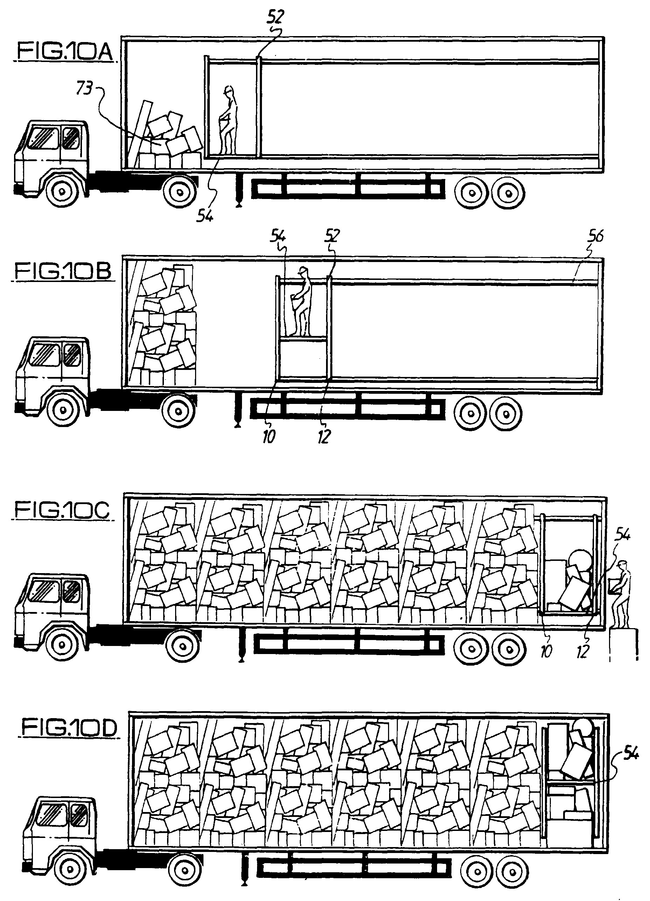

Figure IOC illustrates the condition wherein the trailer has been substantially filled and illustrates the fact that the goods system even when it cannot be moved in a horizontal direction can still be used to provide maximum use of the space available. In Figure IOC there is shown the operator external of the storage area filling the base 54 with further goods. When the goods have reached a certain height the base can then be lifted on the first guide means so as to leave exposed a space underneath the base 54 as shown in Figure 10D which can be filled with further goods 73 thereby utilizing the space above the base 54 and below the same. Typically the goods stored at the end will be those which are to be unloaded first.

Figure 11 illustrates a trailer for the storage of mattresses for beds which are of a more standard size and again the goods system of the invention can be utilized to advantage. In this case the goods system 52 is used and provided on the step of the trailer which previously could not easily be used and by raising and lowering the goods system base 54 so the mattresses can be removed with ease by the operator and in this case placed on a conveyor system which is angularly displaced to provide the movement of the mattresses from the inside of the trailer to external of the trailer for unloading Again there is provided first guide means and second guide means 56 which can be used as appropriate to move the goods handling system base 54 in relation to the storage area.

Further to the figures the base 4 can be utilised as shown in Figure 2 for the reception of loaded pallets thereon, with any necessary securing or location means provided, or can be provided with a floor upon which goods can be directly loaded. The embodiment to be used is largely dependent upon the type of goods to be loaded and the loading systems used by each individual operator.

It is envisaged that the system will operate with equal advantages in a warehouse environment. The main advantages of the invention are that the system is relatively simple to use. Furthermore the system has a minimum of parts and is self contained thereby ensuring that the maximum amount of storage space is available for the storage of goods. This is in contrast to normal moving floor systems which require space in which to accommodate hydraulic lifting equipment and or electrical equipment. The system is considerably more adaptable than existing methods as it allows goods to be directly loaded onto the movable base with a floor or for pallets carrying said goods to be mounted directly onto the frame of the base.

The flexibility offered by this system both in terms of optimum use of storage space and the method of loading and unloading the goods 15 the main advantage over existing methods and represents considerable cost and time savings to the goods carrier and the loader of the trailers and trucks.

The creation of movable bases enables trailers to be loaded where, previously this would not have been possible. Roll pallets can be fitted on the base of the storage area and powered up, and the space below the base can be filled without the loaders being required to get underneath the decks. This can allow roll pallets of, for example, 1.5 metre dimensions, to be lifted above each other and by using maximum height trailers this method allows for the load size to be doubled. All conventional trailers with two floors require full headroom space to be provided to enable the loaders to access the head space which is typically a minumum of 1.8 metres in each deck. Thus this restricts the method of loading using existing double floor storage areas to very light loads, to operate at limits of under 32 tonnes, where there is no limit, or to restrict the load to 1 level of roll pallets. These restrictions are therefore overcome by the greatly improved adaptability and space usage of the invention.

## Claims

1. A transportable storage system in a storage area defined by a floor, ceiling, side walls and at least one end wall, said system comprising at least one goods supporting base (54) and two sets of guide means (10;12;14;16;56) therefore, said sets of guide means (10;12;14;16;56) positioned at or adjacent to said side walls of the storage area, and arranged to allow movement of the at least one base in vertical and horizontal directions within the storage area and characterised in that the at least one goods supporting base (54) is moved in a vertical or horizontal direction along a first set of guide means (10;12;14;16) and the goods supporting base (54) and first set of guide means (10;12;14;16) are arranged to move along the second set of guide means (56) in the other of the vertical or horizontal directions.

2. A transportable storage system according to claim 1 characterised in that the first set of guide means and/or base are provided for movement along a second set of guide means (56) arranged to lie perpendicular to the first set of guide means.

3. A transportable storage system according to claim 2 characterised in that the second set of guide means (56) are mounted on a substantially horizontal plane and the first set of guide means are mounted in a substantially vertical plane.

4. A transportable storage system according to claim 1 characterised in that at least one base is capable of movement within the goods storage area in vertical and horizontal planes along first and second sets of guide means.

5. A transportable storage system according to claim 1 characterised in that each of said guide means is provided on and/or adjacent to a side wall of the storage area to allow substantially all of the floor space of the storage area to be available to store goods thereon.

6. A transportable storage system according to claim 1 characterised in that the base (54) is mounted on the first set of guide means, said guide means provided with banks of rollers (68) or skates thereon and said rollers or skates are arranged to engage and pass along the second set of guide means.

7. A transportable storage system according to claim 6 characterised in that the second set of guide means are mounted on the floor of the goods storage area.

8. A transportable storage system according to claim 1 characterised in that at least one of the guide means (10; 12; 14; 16) includes a drive means locator for engaging drivable means provided on the base.

9. A transportable storage system according to claim 8 characterised in that at least one of the said guide means (10; 12; 14; 16) includes a hydraulically powered ram mounted within the same.

10. A transportable storage system according to claim 8 characterised in that the drive means locator is in the form of a length of cable or wire.

11. A transportable storage system according to claim 8 characterised in that the drive means locator is in the form of a rack member (34).

12. A transportable storage system according to claim 11 characterised in that the rack member is a shaped length of plastics or metal material and includes a plurality of spaced indents along the length thereof.

13. A transportable storage system according to claim 11 characterised in that the rack member is a length of chain mounted along the length of the guide means (10; 12; 14; 16).

14. A transportable storage system according to claim 11 characterised in that the rack member (34) acts in conjunction with the drivable means (30) including pawls (38) provided on the base (54) said pawls acting, when driven as means for driving the base (54) along the rack member (34) and, when not driven, as means for locating the base (54) at a particular position on the said rack member (34).

15. A transportable storage system according to claim 14 characterised in that the pawls (38) act as a safety lock when not powered to prevent movement of the base (54) when the pawl is not powered.

16. A transportable storage system according to any preceding claim characterised in that the drivable means are connected to the drive means provided on the base via a central drive shaft into which is linked a series of link shafts, each of said link shafts connected for rotatable movement and connected with the drive means locators on the guide means.

17. A transportable storage system according to any of the preceding claims characterised in that the movement of the base and/or first set of guide means along the said second set of guide means is manually controlled.

18. A transportable storage system according to claim 17 characterised in that a locking system is provided to allow the manual locking of the base and/or first set of guide means in position on the said second set of guide means said system including locking members which locate in the second set of guide means to prevent movement therealong.

19. A transportable storage system according to any of the preceding claims characterised in that the first set of guide means comprises four guide means, two provided at spaced intervals along and adjacent to each side wall of the storage area to provide improved stability for the base mounted thereon.

## Patentansprüche

1. Transportables Lagersystem in einem Lagerbereich, der durch einen Boden, eine Decke, Seitenwände und wenigstens eine Endwand definiert ist, wobei das genannte System wenigstens eine Güterauflagebasis (54) und zwei Sätze von Führungsmitteln (10, 12, 14, 16, 56) dafür umfaßt, wobei die genannten Sätze von Führungsmitteln (10, 12, 14, 16, 56) an oder neben den genannten Seitenwänden des Lagerbereiches positioniert und so angeordnet sind, daß sie eine Bewegung der wenigstens einen Basis in vertikaler und horizontaler Richtung innerhalb des Lagerbereichs ermöglichen, dadurch gekennzeichnet, daß die wenigstens eine Güterauflagebasis (54) über einen ersten Satz Führungsmittel (10, 12, 14, 16) in eine vertikale oder horizontale Richtung bewegt wird und die Güterauflagebasis (54) und der erste Satz Führungsmittel (10, 12, 14, 16) für eine Bewegung über den zweiten Satz Führungsmittel (56) in die jeweils andere, vertikale oder horizontale, Richtung angeordnet sind.

2. Transportables Lagersystem nach Anspruch 1, dadurch gekennzeichnet, daß der erste Satz Führungsmittel und/oder die Basis für eine Bewegung über einen zweiten Satz Führungsmittel (56) vorgesehen sind, der lotrecht zum ersten Satz Führungsmittel angeordnet ist.

3. Transportables Lagersystem nach Anspruch 2, dadurch gekennzeichnet, daß der zweite Satz Führungsmittel (56) auf einer im wesentlichen horizontalen Ebene montiert ist und daß der erste Satz Führungsmittel in einer im wesentlichen vertikalen Ebene montiert ist.

4. Transportables Lagersystem nach Anspruch 1, dadurch gekennzeichnet, daß sich wenigstens eine Basis innerhalb des Güterlagerbereichs über den ersten und den zweiten Satz Führungsmittel in vertikaler und horizontaler Richtung bewegen kann.

5. Transportables Lagersystem nach Anspruch 1, dadurch gekennzeichnet, daß jedes genannte Führungsmittel an und/oder neben einer Seitenwand des Lagerbereichs vorgesehen ist, damit im wesentlichen die gesamte Bodenfläche des Lagerbereichs für die Lagerung von Gütern zur Verfügung steht.

6. Transportables Lagersystem nach Anspruch 1, dadurch gekennzeichnet, daß die Basis (54) auf dem ersten Satz Führungsmittel montiert ist, wobei das genannte Führungsmittel mit Reihen von Rollen (68) oder Gleitstücken darauf versehen ist, und die genannten Rollen oder Gleitstücke so angeordnet sind, daß sie in den zweiten Satz Führungsmittel eingreifen und darüber laufen.

7. Transportables Lagersystem nach Anspruch 6, dadurch gekennzeichnet, daß der zweite Satz Führungsmittel auf dem Boden des Güterlagerbereichs montiert ist.

8. Transportables Lagersystem nach Anspruch 1, dadurch gekennzeichnet, daß wenigstens eines der Führungsmittel (10, 12, 14, 16) einen Antriebsmittelfixierer beinhaltet, der in antreibbare Mittel eingreift, die sich aufder Basis befinden.

9. Transportables Lagersystem nach Anspruch 8, dadurch gekennzeichnet, daß wenigstens eines der genannten Führungsmittel (10, 12, 14, 16) einen hydraulisch betriebenen Stoßheber umfaßt, der darin montiert ist.

10. Transportables Lagersystem nach Anspruch 8, dadurch gekennzeichnet, daß der Antriebsmittelfixierer aus einem Stück Kabel oder Drahtseil besteht.

11. Transportables Lagersystem nach Anspruch 8, dadurch gekennzeichnet, daß der Antriebsmittelfixierer aus einem Zahnstangenelement (34) besteht.

12. Transportables Lagersystem nach Anspruch 11, dadurch gekennzeichnet, daß das Zahnstangenelement ein geformtes Stück aus Kunststoff- oder Metallmaterial ist und eine Mehrzahl beabstandeter Kerben über seine Länge umfaßt.

13. Transportables Lagersystem nach Anspruch 11, dadurch gekennzeichnet, daß das Zahnstangenelement ein Stück Kette ist, die über die Länge des Führungsmittels (10, 12, 14, 16) montiert ist.

14. Transportables Lagersystem nach Anspruch 11, dadurch gekennzeichnet, daß das Zahnstangenelement (34) mit den antreibbaren Mitteln (30) mit Klinken (38) zusammenwirkt, die an der Basis (54) vorgesehen sind, wobei die genannten Klinken, wenn sie angetrieben werden, als Mittel zum Antreiben der Basis (54) über das Zahnstangenelement (34) dienen, und, wenn sie nicht angetrieben werden, als Mittel zum Anordnen der Basis (54) in einer bestimmten Position an dem genannten Zahnstangenelement (34) dienen.

15. Transportables Lagersystem nach Anspruch 14, dadurch gekennzeichnet, daß die Klinken (38), wenn sie nicht angetrieben werden, als Sicherheitsarretierung dienen, um eine Bewegung der Basis (54) zu verhindern, wenn die Klinke nicht angetrieben wird.

16. Transportables Lagersystem nach einem der vorherigen Ansprüche, dadurch gekennzeichnet, daß die antreibbaren Mittel mit dem an der Basis vorgesehenen Antriebsmittel über eine zentrale Antriebswelle verbunden sind, an die eine Reihe von Verbindungswellen angefügt sind, wobei jede der genannten Verbindungswellen für eine Drehbewegung angeschlossen und mit den Antriebsmittelfixierern an den Führungsmitteln verbunden ist.

17. Transportables Lagersystem nach einem der vorherigen Ansprüche, dadurch gekennzeichnet, daß die Bewegung der Basis und/oder des ersten Satzes Führungsmittel über den genannten zweiten Satz Führungsmittel manuell gesteuert wird.

18. Transportables Lagersystem nach Anspruch 17, dadurch gekennzeichnet, daß ein Arretiersystem vorgesehen ist, um eine manuelle Arretierung der Basis und/oder des ersten Satzes Führungsmittel in der korrekten Positin auf dem genannten zweiten Satz Führungsmittel zu ermöglichen, wobei das genannte System Arretierelemente umfaßt, die sich in dem zweiten Satz von Führungsmitteln befinden, um eine Bewegung darüber zu vermeiden.

19. Transportables Lagersystem nach einem der vorherigen Ansprüche, dadurch gekennzeichnet, daß der erste Satz Führungsmittel vier Führungsmittel umfaßt, wobei zwei in Abständen voneinander über jede und neben jeder Seitenwand des Lagerbereiches vorgesehen sind, um für die darauf montierte Basis eine bessere Stabilität bereitzustellen.

## Revendications

1. Un système de stockage transportable dans une zone de stockage définie par un plancher, un plafond, des parois latérales et au moins une paroi d'extrémité, ledit système comprenant au moins une base de support (54) des marchandises, et deux ensembles de moyens de guidage (10; 12; 14; 16; 56) pour celle-ci, lesdits ensembles de moyens de guidage (10; 12; 14; 16; 56) étant positionnés au niveau desdites parois latérales de la zone de stockage, ou y étant adjacents, et étant agencés pour permettre le mouvement d'une base au moins dans le sens vertical et dans le sens horizontal au sein de la zone de stockage, et caractérisé en ce que l'une au moins des bases de support (54) des marchandises est déplacée dans le sens vertical ou dans le sens horizontal le long d'un premier ensemble de moyens de guidage (10; 12; 14; 16), et la base de support (54) des marchandises, et le premier ensemble de moyens de guidage (10; 12; 14; 16) est agencé pour se déplacer le long du deuxième ensemble de moyens de guidage (56), dans l'autre sens vertical ou horizontal.

2. Un système de stockage transportable, selon les stipulations de la revendication 1, caractérisé en ce que le premier ensemble de moyens de guidage et/ou la base est conçu pour effectuer un mouvement le long d'un deuxième ensemble de moyens de guidage (56) qui est agencé de manière à être perpendiculaire par rapport au premier ensemble de moyens de guidage.

3. Un système de stockage transportable, selon les stipulations de la revendication 2, caractérisé en ce que le deuxième ensemble de moyens de guidage (56) est monté sur un plan essentiellement horizontal et en ce que le premier ensemble de moyens de guidage est monté dans un plan essentiellement vertical.

4. Un système de stockage transportable, selon les stipulations de la revendication 1, caractérisé en ce que l'une au moins des bases est capable de se déplacer au sein de la zone de stockage des marchandises, dans les plans vertical et horizontal, le long des premier et deuxième ensembles de moyens de guidage.

5. Un système de stockage transportable, selon les stipulations de la revendication 1, caractérisé en ce que chacun desdits moyens de guidage est prévu au niveau d'une paroi latérale de la zone de stockage, ou y est adjacent, afin de meure essentiellement la totalité de l'espace du plancher de la zone de stockage à disposition pour y stocker des marchandises.

6. Un système de stockage transportable, selon les stipulations de la revendication 1, caractérisé en ce que la base (54) est montée sur le premier ensemble de moyens de guidage, lesdits moyens de guidage comportant des rangées de rouleaux (68) ou de patins sur ceux-ci, et lesdits rouleaux ou patins étant agencés de manière à s'engager dans le deuxième ensemble de moyens de guidage et à passer le long de ceux-ci.

7. Un système de stockage transportable, selon les stipulations de la revendication 6, caractérisé en ce que le deuxième ensemble de moyens de guidage est monté sur le plancher de la zone de stockage des marchandises.

8. Un système de stockage transportable, selon les stipulations de la revendication 1, caracterisé en ce que l'un au moins des moyens de guidage (10; 12; 14; 16) comporte un positionneur de moyen d'entraînement destiné à s'engager avec le moyen pilotable monté sur la base.

9. Un système de stockage transportable, selon les stipulations de la revendication 8, caractérisée en ce que l'un au moins desdits moyens de guidage (10; 12; 14; 16) comprend un vérin à commande hydraulique dans celui-ci.

10. Un système de stockage transportable, selon les stipulations de la revendication 8, caractérisé en ce que le positionneur de moyen d'entraînement se présente sous la forme d'une longueur de câble ou de fil métallique.

11. Un système de stockage transportable, selon les stipulations de la revendication 8, caractérisé en ce que le positionneur de moyen d'entraînement se présente sous la forme d'un élément de crémaillère (34).

12. Un système de stockage transportable, selon les stipulations de la revendication 11, caractérisé en ce que l'élément de crémaillère se présente sous la forme d'une longueur façonnée de plastique ou de matériau métallique, et comporte une pluralité d'encoches espacées sur toute sa longueur.

13. Un système de stockage transportable, selon les stipulations de la revendication 11, caractérisé en ce que l'élément de crémaillère se présente sous la forme d'une longueur de chaîne montée sur toute la longueur des moyens de guidage (10; 12; 14; 16).

14. Un système de stockage transportable, selon les stipulations de la revendication 11, caractérisé en ce que l'élément de crémaillère (34) agit en conjonction avec le moyen pilotable (30) comprenant des cliquets (38) prévus sur la base (54) lesdits cliquets agissant le long de l'élément de crémaillère (34) quand ils sont utilisés comme organes menants pour entraîner la base (54), et agissant en tant que moyen pour positionner la base (54) sur un emplacement spécifique sur ledit élément de crémaillère (34), quand ils ne sont pas utilisés pas comme organes menants.

15. Un système de stockage transportable, selon les stipulations de la revendication 14, caractérisé en ce que les cliquets (38) agissent en tant que verrouillage de sécurité quand ils ne sont pas entraînés, afin d'empêcher tout mouvement de la base (54) quand le cliquet n'est pas entraîné.

16. Un système de stockage transportable, selon les stipulations de l'une quelconque des revendications précédentes, caractérisé en ce que le moyen pilotable est connecté au moyen d'entraînement monté sur labase, parl'intermédiaire d'un arbre d'entraînement central auquel est reliée toute une série d'axes articulés, chacun desdits axes articulés étant connecté en vue d'un mouvement rotatif et étant relié aux positionneurs des moyens d'entraînement sur le moyen de guidage.

17. Un système de stockage transportable, selon les stipulations de l'une quelconque des revendications précédentes, caractérisé en ce que le mouvement de la base et/ou du premier ensemble de moyen de guidage le long du deuxième ensemble de moyen de guidage est contrôlé par une commande manuelle.

18. Un système de stockage transportable, selon les stipulations de la revendication 17, caractérisé en ce qu'un système de verrouillage est prévu afin de permettre le verrouillage manuel de la base et/ou du premier ensemble de moyens de guidage monté sur le deuxième ensemble de moyens de guidage, ledit système comprenant des éléments de verrouillage qui se positionnent dans le deuxième ensemble de moyens de guidage afin d'empêcher tout mouvement le long de celui-ci.

19. Un système de stockage transportable, selon les stipulations de l'une quelconque des revendications précédentes, caractérisé en ce que le premier ensemble de moyens de guidage comprend quatre moyens de guidage, deux prévus à des intervalles réguliers le long de chaque paroi latérale de la zone de stockage, et adjacents à celle-ci, afin d'offrir une stabilité améliorée pour la base qui est montée dessus.
